# EUROPEAN PATENT APPLICATION

(11) **EP 4 692 168 A1**
(43) Date of publication of application: **11.02.2026**
(21) Application number: 24193605.3
(22) Date of filing: 08.08.2024
(51) Int. Cl.: C08G 65/40, C08G 65/46

(54) **METHOD AND SYSTEM FOR PURIFICATION OF PAEK AND USE OF SUPERCRITICAL FLUID FOR SAID PURIFICATION**

(71) Applicant: Evonik Operations GmbH, 45128 Essen (DE)
(72) Inventor: HUSSAIN, Muhammad, 63486 Bruchköbel (DE); SCHERBLE, Jonas, 64297 Darmstadt (DE)
(74) Representative: Evonik Patent Association

(57) **Abstract**

The present invention relates to a method for purifying a polymer selected from the group of polyaryletherketones (PAEK) obtained in a first solvent, the use of a supercritical fluid preferably comprising carbon dioxide (CO₂) and optionally a co-solvent for the purification of a polymer selected from the group of PAEK. Further, a system is provided configured to perform the method steps of the present invention.

## Description

### Field of the invention

The present invention relates to a method for purifying a polymer selected from the group of polyaryletherketones (PAEK) obtained in a first solvent, the use of a supercritical fluid preferably comprising carbon dioxide (CO₂) and optionally a co-solvent for the purification of a polymer selected from the group of PAEK. Further, a system is provided configured to perform the method steps of the present invention.

### Background

The present disclosure relates generally to the purification of high performance polymers selected from the group of polyaryletherketones (PAEK). The generic term polyaryletherketones (PAEK) refers to a family of high-performance polymers with excellent thermomechanical properties. These polymers contain aromatic rings linked by an oxygen atom (ether) and/or a carbonyl group (ketone). Their properties depend mainly on the ether/ketone ratio. In the abbreviations used to designate the members of the PAEK family, the letter "E" denotes an ether function and the letter "K" denotes a ketone function. In the remainder of the description, these abbreviations may be used instead of the usual names to designate the compounds to which they refer.

The PAEK family includes in particular polyetherketone (PEK), polyetheretherketone (PEEK), polyetheretheretherketone (PEEEK), polyetheretherketoneketone (PEEKK), polyetherketoneketone (PEKK), polyetherketone-etherketoneketone (PEKEKK), poly-ether-ether-ketone-ether-ketone (PEEKEK), poly-ether-ether-ether-ketone (PEEEK) and poly-ether-diphenyl-ether-ketone (PEDEK).

The best known PAEK is polyetheretherketone PEEK. PAEK polymers are characterized by a relatively high melting temperature from about 300 °C and high glass transition temperature, typically above 100° C. Depending on the application requirements, there is the need to produce highly pure polymers of said PAEK polymer family. Excellent physical properties of PAEK such as thermal stability, mechanical stability, electrical insulation and corrosion resistance make PAEK the polymer of choice in highly regulated areas such as medical devices, aerospace and electronics as semiconductor manufacturing or in the food industry.

Specifically, one particular target application for the present invention is for long-term medical implants and medical devices fulfilling the requirements of the strictest category of biocompatibility according to United States Pharmacopeia i.e. the USP class VI. Medical industry uses the high-quality materials due to their inertness, flexibility and biocompatibility. The out-standing mechanical, chemical, and high temperature stability of PAEK fulfil the demanding requirements for permanent surgical implants.

Accordingly, PAEK has its own distinctive place both in short term and long-term implants. Due to high purity requirement for the medical applications, removal of impurities like oligomers, rest monomers and used solvent from the polymer batches is an important step in the production of PAEK.

One challenge of the present invention is to optimally produce high purity polymers of the PAEK family without compromising the physical properties such as mechanical strength, wear/ heat and chemical resistance while maintaining the ability to easily process and finally recycle the polymer.

The following sources of impurities in high molecular weight PAEK polymer materials are known. On the one hand, the manufacturing process of polymeric materials can result in impurities such as residual monomers or non-polymerizable impurities present in the monomers.

Impurities producing PEEK could be for example monofluorobenzopheone, 2,4'-difluorobenzopheone, 4,4'-difluorobenzophenone, 4-fluoro-4'-chlorobenzopenone, 4,4'-dichlorobenzophenone and 4-fluoro-4'-nitrobenzophenone caused by monomers and their impurities.

On the other hand, additives to initiate or accelerate the reaction such as solvents to facilitate processability or to improve the performance of the final polymeric product may contribute to impurities. Common additives of low molecular weight are for example plasticizers antioxidants and/or light stabilizers.

The moulding composition can moreover also comprise conventional amounts of additives which are needed in order to establish certain properties. Examples of these are pigments or fillers, such as carbon black, titanium dioxide, zinc sulfide, reinforcing fibres, e.g. glass fibres, processing aids, such as waxes, zinc stearate or calcium stearate, antioxidants, UV stabilizers, and additions which give the product anti electrostatic properties, for example carbon fibres, graphite fibrils, stainless-steel fibres, or conductive carbon black.

The existing process of producing purified PAEK is very cost intensive and lengthy. Among the known processes, solvent extraction is mostly used for the removal of impurities under normal pressure (approx. 1013 mbar). A drawback of such known solvent extraction process is that they usually require the use of large quantities of the solvents. This implies the following disadvantages:
Firstly, it has a negative impact on costs, because large quantities of solvents need to be purchased and after use disposed or recycled. Secondly, depending on the nature of the solvent, safety and environmental requirements such as flammability, emission of volatile organic compounds (VOC) and other hazards need to be addressed. Additionally, lengthy drying procedures are usually required to fully remove the solvent from the polymeric material, resulting in increased operational complexity and higher costs. Finally, due to limitations of common purification processes the impurities cannot be efficiently reduced to low levels in the ppm range; the whole processes of purifications are very time consuming and need large values of energy.

Various processes with a variety of starting materials for producing PAEK are known. PAEK may be produced by electrophilic aromatic substitution using the so called Friedel-Crafts catalysed reaction or by nucleophilic aromatic substitution. The Two types of PAEK synthesis are known for example from US 4,874, 839.

Accordingly, Polyaryletherketone (PAEK) in general and Polyetheretherketone (PEEK) in particular may be produced by the so-called nucleophilic route i.e. based on nucleophilic displacement (condensation) reactions which produce tough crystalline polymers. The preparation of PAEK by nucleophilic polycondensation is a known process which is described in a multitude of patent applications, for example in EP 0 244 167 or US 4, 176, 222.

A common way to produce PEEK is by reacting 1 ,4-benzenediol (hydroquinone, HQ) with 4,4-diflurobenzophenone (BDF) in diphenyl sulfone (DPS) in the presence of alkali-metal carbonates as Na₂CO₃ or K₂CO₃ or other substances as LiCI under an inert atmosphere at temperatures approaching the melting point of the polymer (>300°C).

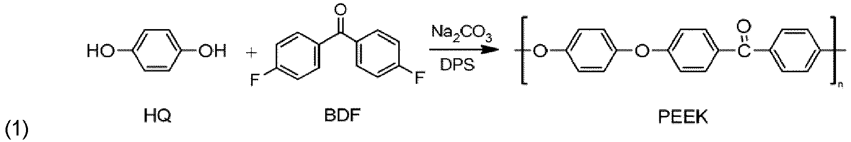

The reaction according to formula (1) is carried out in molten DPS (melting point 123°C) as a solvent. The educts are loaded in a reactor and heated up to the reaction temperature in the range of about 300°C - 320°C. After generating PEEK using molten DPS as a solvent by- products such as NaF are generated.

After the above reaction and grinding is performed, usually a very complicated washing of the reactor effluent follows. The washing has the aim of removing the reaction solvent, inorganic salts, residual monomers and other compounds from the PEEK. However, the existing process of producing purified PEEK is very cost intensive and lengthy. Accordingly, a plurality of refinement washings are required. In known processes ethanol and water remove the diphenyl sulfone DPS and NaF and excess of the used base (carbonate) as well as excess of the reaction partners, respectively.

A disadvantage is that in both refining stages (using organic solvent and water respectively) several washing steps need to be carried out to achieve sufficiently low residual contents of impurities. Typically in an organic refining stage using ethanol between 7 to 15 washing steps are needed, wherein for each washing step a vessel may be used and ethanol is led in a counter current to separate unreacted BDF (monomer) and DPS (solvent) as the main impurities from the crude product mixture. This makes the process very tedious and expensive due to extensive use of solvent. Moreover, safety is a critical parameter to account for. To remove the residual salts from the product in the second refining stage, at least ten counter current water washing steps are carried out to reach the required purity targets of salt contents for medical grade PEEK.

Due to the persisting shortcomings in the current refining methods and systems especially for PEEK production for high value medical applications, there remains a need for an alternative method that is effective, less time consuming, reproducible, economical and has an ability to prepare ultrapure polymeric articles from the polymeric material without the reoccurrence of impurities.

Another known member if the PAEK family is PEKK having also aromatic rings as PEEK but differ in the ratio of ether- and keto- group, wherein the recurring unit has two keto groups. Routes for preparing PEKK are known form EP 3 438 085 A1. One common way of synthesis of PEKK is the reaction of terephtaloyl and isophtaloyl chloride with diphenyl ether in a solvent in the presence of aluminum trichloride (AlCl₃). One problem faced in the production of polyether ketone ketone (PEKK) is - similar to the production of PEEK - that it requires restrictive purification steps to eliminate impurities such as residual salts and/or solvent, if ultrapure polymers are required.

### Summary of the Invention

It is an objective of the present disclosure to provide a process for the removal of undesired monomers, solvents and other impurities such as salts to produce ultrapure PAEK polymers, preferably for special technical and medical applications.

Accordingly, it is an object of the present invention to provide an improved purification process with which the disadvantages of the prior art can be overcome and impurities as the residual contents of reaction solvents and salts can be reduced to purity levels required for medical applications or in the electronics industry. More particularly, the present invention aims to improve the existing refining processes such as solvent and salt extraction for the manufacturing of ultrapure PEEK polymer.

This object is achieved by a method for purifying a polymer selected from the group of polyaryletherketones (PAEK) obtained in a first solvent according to the independent claim 1 and by the use of a supercritical fluid for the purification of said polymer according to the respective use claim. The scope of this invention is defined by the appended claims. Various features and advantages of the invention will be apparent from the dependent claims and are set forth in part in the following description the description and figures, respectively. Further, a system is provided configured to perform the method steps of purifying said polymer selected from the group of polyaryletherketones (PAEK).

PAEK polymers preferably comprise units of the following formulae:

(-Ar-X-) and (-Ar₁-Y-),

wherein Ar and Ar₁ each denote a divalent aromatic radical; Ar and Ar₁ may preferably be selected from the group consisting of 1,3-phenylene, 1,4-phenylene, 4,4'-biphenylene, 1,4-naphthylene, 1,5-naphthylene and 2,6-naphthylene; X is an electron-withdrawing group, which can preferably be selected from carbonyl and sulphonyl; Y is a group selected from an oxygen atom (O), a sulphur atom (S), an alkylene group (such as -CH₂-) and isopropylidene or the like.

In a preferred embodiment at least 50 %, preferably at least 70 % and in particular at least 80 % of the X groups are carbonyl groups while at least 50 %, preferably at least 70 % and in particular at least 80 % of the Y groups are oxygen atoms.

According to a further preferred embodiment, at least 100 % of the X groups consist of carbonyl groups and 100 % of the Y groups of oxygen.

According to another preferred embodiment, the PAEK particles are PEKK particles and preferably contain structural units of the following formulae la, Ib and/or mixtures thereof:

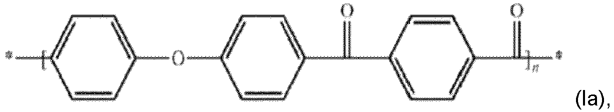

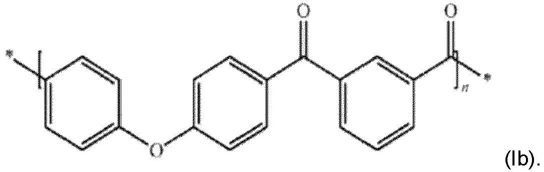

According to another preferred embodiment, the PAEK particles are PEEK particles and preferably contain structural units of the following formula Ila:

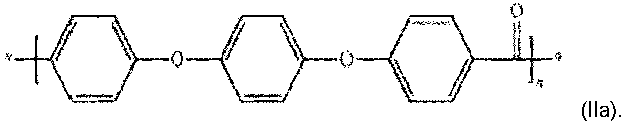

However, other arrangements of the carbonyl and oxygen groups are also within the terms of the embodiments of the present disclosure. For instance, the PEEK particles may contain para sequences of formula IIb:

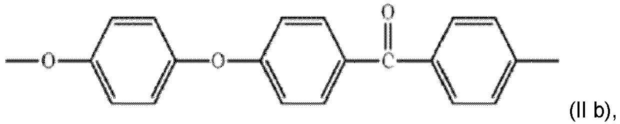

The sequence may be completely para, but it is also possible to introduce partially or completely metasequences according to formulae (IIc) and/ or (Ild): 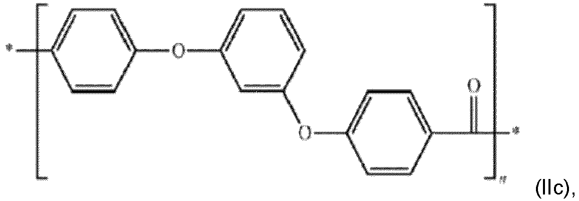 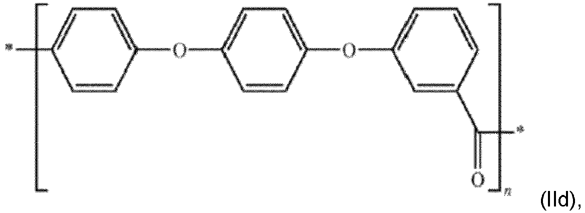 or ortho-sequences according to formula

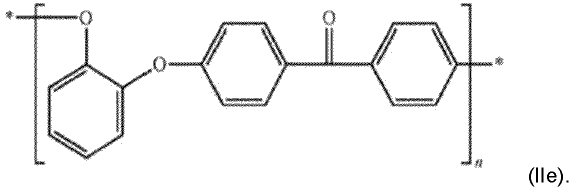

According to a further preferred embodiment, the PAEK-particles are PEK-particles and preferably contain structural units of formula III:

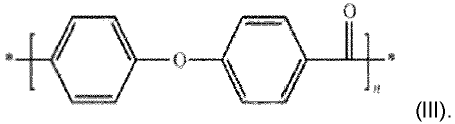

The sequence may be completely para, but it is also possible to introduce partially or completely metasequences according to formulae (IV) and (V):

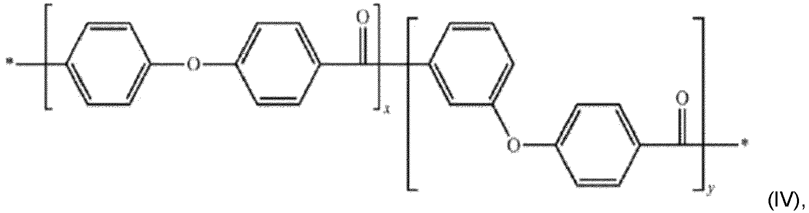

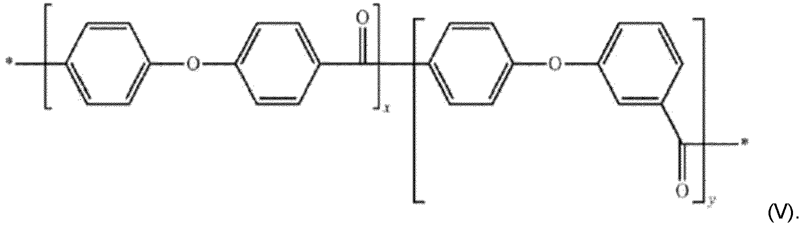

According to another preferred embodiment, the PAEK-particles are PEEKK-particles and preferably contain structural units of formula VI:

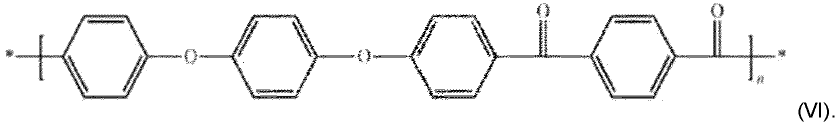

According to another preferred embodiment, the PAEK-particles are polyetherketone-etherketoneketone (PEKEKK), with a recurring unit of formula (VIIa)

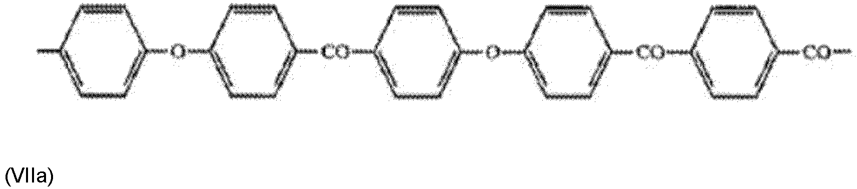

The PEKEKK particles may contain sequences of formula Vllb or Vllc:

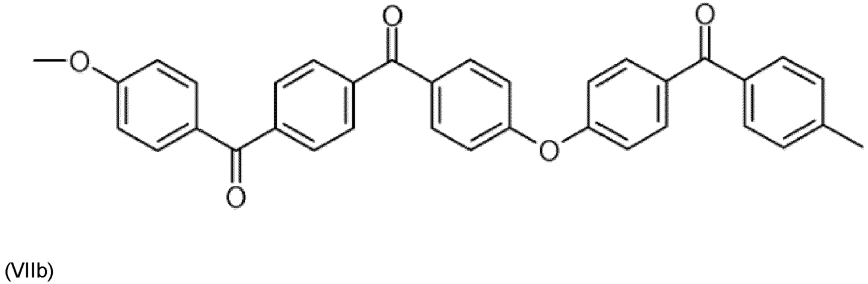

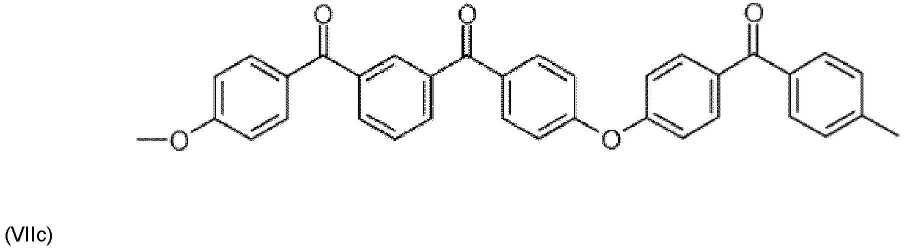

According to another preferred embodiment, the PAEK-particles are PEEEK-particles and preferably contain structural units of formula VIII:

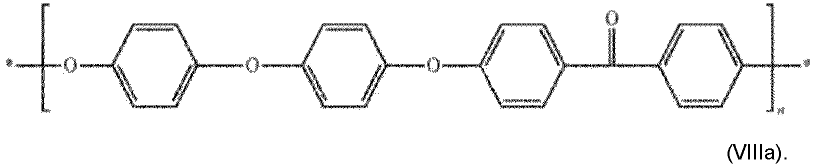

In these structures it is possible to introduce at the ethers and ketones metasequences, but also bisphenol sequences according to the formula IX (PEDEK):

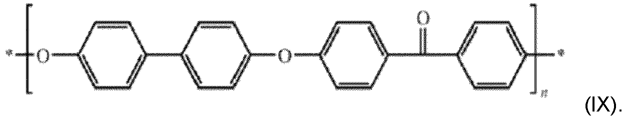

The indices "x", "y" and "n" are each preferably an integer of at least 50 or at least 100, preferably in the range from 150 to 950, particularly preferably in the range from 150 to 500.

The radical "*" in each case is preferably -H; -C₁₋₁₈ alkyl, branched or unbranched, unsubstituted; or -aryl, unsubstituted or mono- or disubstituted with -C₁₋₁₀-alkyl or -OC₁₋₁₀-alkyl, in each case branched or unbranched, unsubstituted; or halogen.

In accordance with an aspect of the invention, there is provided a method for purifying a polymer selected from the group of polyaryletherketones (PAEK) obtained in the presence of a first solvent comprising the following method steps:
refining the polymer with a second solvent; refining the polymer with water; and separating impurities comprising at least one of the first solvent and residual monomers from the polymer through contact with a supercritical fluid.

In this way impurities such as the first solvent, which is used for producing the polymer, and/ or monomeric impurities or residual monomers can be efficiently removed. In case that PEEK is produced by nucleophilic synthesis the first solvent is DPS and the monomer is BDF.

It is noted that the method steps can be carried out in any order. It is required that this separating with supercritical fluid is done at least once in the refining process wherein the step of separating with supercritical fluid can be carried out either as first step, as second step and/or as final step. It is also possible to perform the step of separating with supercritical fluid at least twice i.e. as prior to the first refining or prior to the second refining step and as final step.

Supercritical Fluid Extraction (SFE) is a process of separating one component (the extractant) from another (here the polymer) using supercritical fluids whereby supercritical CO₂ is a suitable extracting solvent. Impurities in the supercritical fluid can be dissolved more efficiently than using only an organic solvent with temperature and pressure each below the critical point, because supercritical fluids have excellent solvent properties. The supercritical fluid is a material which is neither gas nor a liquid but adopts properties between those of a gas and those of a liquid. The supercritical state is characterised by a very high fluidity and very high permeability due to its low viscocity.

In the present method, an approach is used that allows shortening of at least part of the refining methods and more particularly to reduce the number of washings steps within the refining stages. For instance, in combination with a final separation step for extraction with a supercritical fluid can be reduced or shortened because fewer ethanol washings steps (in the refining step with a second solvent) can be performed. Further, it is advantageous that water used during preceding purifying method steps can be dried by using the supercritical carbon dioxide. A further advantage of the use of a supercritical fluid such as scCO₂, optionally during the final extraction step, is to increase the quality of the product and increase the safety of the process in general because less solvent is used. By using a combination of the two refining stages with the separation with supercritical fluid a deep removal of BDF and DPS has been achieved successfully. Based on the hybrid approach the solvent use could be reduced drastically.

According to another aspect, the use of a supercritical fluid for the purification of a polymer is disclosed, wherein the polymer is selected from the group of polyaryletherketones (PAEK). As an example of a suitable supercritical fluid carbon dioxide (scCO₂), optionally with a co-solvent, can be used.

The use of supercritical fluid with or without a conventional preceding refining process with two stages, wherein the supercritical fluid is preferably scCO₂ and optionally along with a co-solvent, does not only provide the possibility of the selective removal of the desired impurities but also to optimize one or more extraction steps. Surprisingly, by replacing part of the conventional refining methods steps comprising solvent and salt extraction with usually at least 7 to 10 washing steps with a further separation step using supercritical fluid (e.g. scCO₂ with or without co-solvent) the washing cycles, passages or steps in the ethanol and water refining stages, respectively have been reduced down to three or two washing cycles or washing steps and preferably to a single washing cycle or step. In this configuration i.e. using at least supercritical fluid almost at least about 90 %, 95 %, 99 % up to about 100 % of the targeted components have been removed and ultrapure PAEK polymer achieved.

It is noted that the extractant system using both the supercritical fluid carbon dioxide (CO₂) and a co-solvent can remove up to 100% of each impurity without the intervention of any conventional refining step. One potential realization of this beneficial performance is to use an open loop operation, wherein supercritical fluid carbon dioxide (scCO₂) and ethanol co-solvent can be kept flowing to remove impurities as DPS and BDF.

Although CO₂ is a preferred supercritical fluid, the supercritical fluid may also be selected from other suitable species, such as water, methane, ethane, ethylene, propylene, ethanol, methanol, or a mixture thereof. It is noted that if an alcohol is used as extractant it cannot at the same time be used as a co-solvent.

In accordance with another aspect of the invention, there is provided a system configured to perform the method steps according to the aforementioned method for purifying comprising:
a reactor to obtain a polymer in the presence of a first solvent, a refining unit configured to refine the polymer using a second solvent; a water refining unit and an autoclave system configured to separate impurities from the polymer by contacting with supercritical fluid, preferably supercritical carbon dioxide (CO₂).

Optionally, the present method for purifying a polymer selected from the group of polyaryletherketones (PAEK) obtained in the presence of a first solvent is implemented, wherein during the step of separating the impurities, the polymer is subjected to the supercritical fluid carbon dioxide (CO₂) at a pressure in the range of at least 95 bar and 180 bar and/or at a temperature in the range of at least 31°C and 74°C.

Other suitable minimum pressures as 100 bar, 110 bar, 120 bar, 130 bar, 140 bar 150 bar or 175 bar can be selected, wherein the solvent strength increases with higher pressures, which is closely related to the density. For security a maximum pressure of 350 bar or 300 bar, preferably maximum 270 bar, 240 bar or 210 bar, more preferably 180 bar should not be surpassed. That is to say solubility in a supercritical fluid tends to increase with density/pressure of the fluid (at constant temperature). Further other minimum temperatures can be chosen 35°C, 40°C, 45°C, 50°C, 55°C, 60°C, 65°C or 70°C.

In this way the carbon dioxide is increased to be at or above its critical point. More specifically the critical temperature of carbon dioxide is about 31 °C (304 K) and the critical pressure is 74 bar. Supercritical fluids are thus highly compressed materials, which adopt properties between those of a gas and those of a liquid, in particular with higher dissolving and extracting power. The use of supercritical fluid CO₂ as a solvent is further advantageous due to its non-toxic, cheap and non-flammable nature. Thus, it can be safely used in the purification of polymeric material to generate ultrapure products and ensure the removal of impurities comprising solvents, monomer and oligomers. The latter may be unreacted monomers or oligomers present as by-products from the polymerization process.

The residual first solvent after the first refining step remains as impurity also after a second refining with e.g. water and needs further purification. Lengthy drying procedures can be reduced if not omitted to fully remove the solvent and/or water from the polymeric material, because supercritical carbon dioxide is able to dry the pre-treated polymer mixture. This results in less complexity and less costs of the purification method. The use of supercritical CO₂ or other acceptable supercritical fluids will provide a more complete extraction of the residual alcohol and salts, respectively.

The method may be further modified by adding during the step of separating the impurities a co-solvent in the range of 0,5 vol.-% to 30 vol.-% such that a monophasic mixture of the supercritical fluid CO₂ and co-solvent is formed.

Optionally other co-solvent ranges can be selected as follows: 5 vol.-% to 30 vol.-%, optionally between 10 vol.-% or 25 vol.-%, more preferably 15 vol.-% or 20 vol.-%

In this way undesired impurities such as solvents, which are not soluble in supercritical CO₂ alone but in the additional co-solvent, can be removed in order to obtain a high purity polymer. If a binary extractant system is used the conditions in the pressure reactor needs to be chosen in the corresponding phase diagram to ensure the supercritical state of the mixture and a monophasic extractant system.

According to another preferred embodiment, wherein the supercritical fluid carbon dioxide (CO₂) and a co-solvent form an extractant system, the co-solvent is added in excess such that a biphasic mixture of the extractant system is formed in the step of separating the impurities. That is to say if a co-solvent such as ethanol is added to the carbon dioxide in excess, the extractant system is biphasic if supercritical conditions are provided. In the latter case there would be the following phases during the step of separating the impurities:
1) supercritical fluid CO₂ and co-solvent are in one phase (monophasic)
2) extended co-solvent phase (e.g. ethanol is liquid below boiling point of ethanol 78 °C)
3) polymer phase (solid)

The extended co-solvent phase is advantageous, when one or more impurities are very high.

The use of supercritical fluid CO₂ as a major component i.e., at least 70 vol.-%, preferably at least 80 vol.%, more preferably 90 vol.-% to 95 vol.-% of the mixture is advantageous being non-toxic and cheap. In the present disclosure it is used together with a co-solvent in the purification of polymeric material to generate ultrapure products and ensure the removal of all solvents and salts as well as monomer and oligomer impurities. Using supercritical CO₂ with a co-solvent can be called a hybrid approach, which in terms of performance is more beneficial than using supercritical CO₂ alone. In a preferred embodiment the purification of PAEK with supercritical CO₂ in combination with a co-solvent, as for example ethanol, is operated in an open loop to remove the DPS and BDF of the polymeric material.

According to another exemplary method, separating using supercritical CO₂ comprises optionally adding at least 5 vol.-% of a co-solvent and maximum 95 vol-% supercritical CO₂.

Experiments have shown that a supercritical CO₂/co-solvent binary extractant system with small amounts of a co-solvent of at least 5 vol.-% or wt.-%, optionally 10, 15 or 20 vol.-% or wt.-%, show more efficient removal rates of impurities than if scCOz is taken alone. For example, at least the half of the solvent DPS could be removed after about 8 hours, when using 5 vol.% ethanol as co-solvent. If faster removal of at least >95 to 98% within 4 hours is desired a co-solvent portion of 20 vol.-% has shown reproducible results. Especially for the impurities diphenyl sulfone (DPS) and difluorobenzophenone (BDF), respectively.

According to the present disclosure the co-solvent can be selected from the group of ethanol, acetone or ethyl acetate, preferably ethanol or acetone and more preferably ethanol.

According to an exemplary embodiment of the present disclosure the polyaryletherketones (PAEK) is polyether ether ketone (PEEK), which after the refining steps and use of supercritical fluid for separating is ultrapure, preferably with concentrations of each impurity component and more preferably the total sum of impurities of the polymer to less or equal than about 25 parts per million (ppm) to about < 5 part per million (ppm).

In this way medical grade PAEK, preferably PEEK can be produced. This PAEK of high purity can be used for a variety of applications such as pharmaceutical packaging or manufacturing.

Optionally the polymer is ground in the presence of water to powder form before the refining begins.

The water is used for cooling the grinding process in the grinder and remains at least partially in the subsequent refining step. By providing a powder the surface that may contact during the refining process steps the solvents or extractant such as the supercritical fluid can be increased.

According to the present disclosure the impurities to be removed comprise at least one polymerisation solvent, preferably diphenyl sulfone (DPS) and called hereafter the first solvent, or a plurality of the polymerisation solvents and/or residual monomer difluorobenzophenone (BDF).

Optionally the first solvent is diphenyl sulfone (DPS) and is removed in the refining step with a solvent being ethanol by maximum five washing steps or cycles, preferably two or three washing step or cycles, such that at least about 75%, preferably at least 80% diphenyl sulfone (DPS) is removed prior to the use of supercritical fluid.

Further optionally difluorobenzophenone (BDF) concentrations are reduced to between 300-400 ppm BDF in the refining step with a solvent being ethanol using maximum three washing steps or washing cycles.

Another exemplary embodiment of the method according to the present disclosure comprises:
After performing the step of separating with the supercritical carbon dioxide at least 4 hours with the assistance if co-solvent impurities such as monomeric impurities, preferably difluorobenzophenone (BDF), are removed in the presence of the co-solvent by at least 75% to 100%.

Experiments have shown that the scCO₂-co-solvent binary extractant system is suited to efficiently extract impurities such as the first solvent DPS or the monomer BDF, that occur at the production of PAEK, preferably PEEK, whereas said impurities are difficult to remove through conventional counter current ethanol refining process.

According to another exemplary embodiment of the method or system the carbon dioxide is recycled after the pressure of the supercritical carbon dioxide has been reduced to separate the impurities in at least one separator.

Recycling the carbon dioxide saves extractant required for the process. In the recycling subsystem at least one fraction can be retrieved by the at least one separator. Depending on how the pressure and temperature conditions are regulated in the separator different fractions can be produced and then removed via the respective outlets.

Optionally, one separator or a plurality of separators may comprise a charcoal or an activated carbon filter for improving the separation process and providing better purified carbon dioxide.

According to an exemplary system configured to perform the method steps according to the present disclosure the autoclave system comprises a pressure vessel and a subsystem for recycling carbon dioxide comprising at least one separator, preferably comprising charcoal bed; wherein the pressure vessel is configured for pressures up to 1000 bar and for temperatures of maximum about 100°C.

By recycling the carbon dioxide carbon dioxide and purifying it to a high-quality carbon dioxide it is avoided that the use of the recycled carbon dioxide reintroduces impurities in the PEEK.

According to an exemplary embodiment the polymer is prepared by reacting 1,4-benzenediol (hydroquinone, HQ) or one of the group of homologues comprising 4,4' biphenol, 4,4'-Oxydiphenol with 4,4 difluorobenzophenone (BDF) in the presence of alkali-metal carbonates, preferably at a temperature of at least 300°C.

BDF, used for the polymerisation reaction, is also one of the impurities which can be well removed by using supercritical fluid carbon dioxide alone or in combination with at least 5% of a co-solvent, preferably ethanol.

According to a preferred embodiment the impurities are removed by the method using supercritical fluid, such that the concentrations of the impurities of the polymer can be reduced to less than about 0,5 parts per million (ppm).

In this way medical grade PEEK can be provided for use in implants or other applications which require ultrapure products.

According to another aspect of the present disclosure and use of supercritical fluid for purification a polymer, the PAEK, preferably PEEK to be purified is of technical grade, which is optionally commercially available, and only supercritical fluid is used for further purifying the polymer, wherein processing time of the step of separating with supercritical fluid with a co-solvent the impurities is at least 4 hours in order to reduce the concentrations of the impurities of the polymer comprising at least difluorobenzophenone (BDF) and diphenyl sulfone (DPS) to less than about 80 parts per million (ppm).

This shows that e.g. scCO₂/ethanol system is suited to further purify commercially produced PEEK of technical grade in order to generate medical grade PEEK. This new approach reduces the consumption of pure ethanol, which is conventionally used for extra washings to further refine the technical PEEK to an ultrapure PEEK product. Thus, the new inventive purification process has proven that even relatively small amounts of DPS and BDF can be removed when using a mole fraction of CO₂ of at least 70 % along with a co-solvent as long as the supercritical state (supercritical pressure as well as temperature) and a monophasic system are provided in the pressure vessel.

The process of the present disclosure has the further advantage that the introduction of supercritical CO₂ to the refinement process reduces the number of washing steps of ethanol and/or water required and simultaneously improves the purity of the resulting PEEK, whilst also reducing the cost and time.

Further, an ultrapure polymer selected from the group of polyaryletherketones (PAEK), preferably PEEK or PEKK, purified according to the preceding disclosure is provided.

### Brief Description of the Figures

The accompanying figures illustrate exemplary embodiments of the disclosure and serve to explain, by way of example the principles of the disclosure and are not intended to be drawn to scale or to restrict the disclosure to the embodiment illustrated in the figures. Where technical features in the figures or detailed description are followed by references signs, the reference signs have been included for the sole purpose of increasing the intelligibility of the figures and description. For purposes of clarity, not every component may be labelled in every figure.
- FIG. 1: shows a phase diagram for a binary system comprising carbon dioxide and ethanol at different temperatures;
- FIG. 2: shows a schematic view of an exemplary system and method for purification of a PAEK polymer;
- FIG. 3: shows a detail of a system 100 for purification of the PAEK polymer comprising an alternative subsystem 330, which can be implemented in the system of FIG. 2 or FIG. 8;
- FIG. 4: shows a flow chart of another exemplary method of purification of a PAEK polymer;
- FIG. 5A: illustrated results of experiments of separating impurities from the polymer with supercritical fluid with and without co-solvent, wherein the remaining concentrations of the impurity BDF are shown in dependence of the processing time;
- FIG. 5B: shows the same experiment conditions as in FIG. 5A, wherein the remaining concentrations of the impurity DPS are shown in dependence of the processing time;
- FIG: 6: shows a graph comparing the results of other experiments showing the DPS & BDF removal using a 20 wt.-% ethanol scCO₂ mixture at 95 bar and at 45°C;
- FIG. 7: shows schematically the use of scCO₂ optionally with a co-solvent 423 for purification of a PEEK polymer; and
- FIG. 8: shows a flow chart of another exemplary method 800 for purifying a polymer selected from the group of polyaryletherketones (PAEK).

### Detailed description

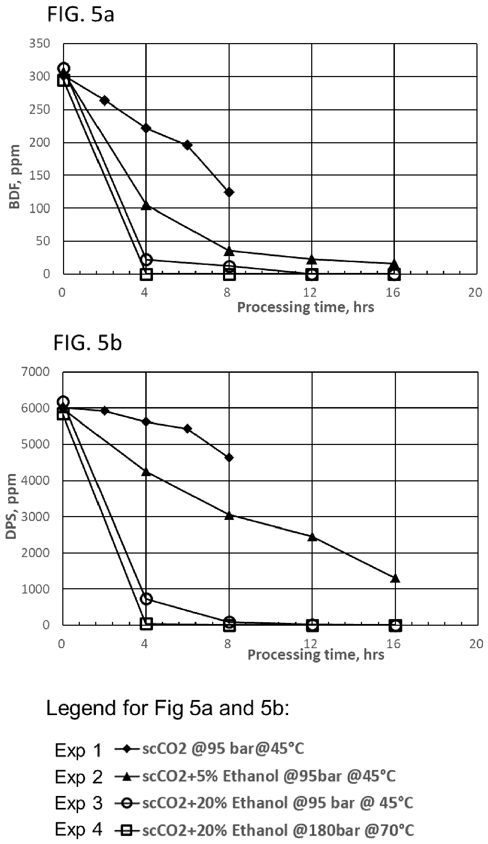

For showing the technical effect of the method of purifying a polymer from the group of PAEK the remaining impurities in the polymer have been detected as shown for example in Figures 5a and 5b. The analytical methods for the determination of DPD and BDF may be selected from gas chromatography - flame ionization detection (GC-FID) or Inductively Coupled Plasma- Optical Emission Spectrometry (ICP-OES) and as described in the following:

### Analysis of DPS and BDF using GC-FID

A PEEK powder sample (2,0 g) is placed in a 100m! sampler vial added by 40 g dichloromethane (DCM). The sample vial is put on an oscillator and oscillate for an hour at room temperature. Afterwards 20 µl of n-hexadecane is placed in a new sample vial (20ml), 20g of the prepared DCM solution of PEEK is added and well mixed. After that 1 ml of the solution is placed in a 2 ml auto-sampler vial and analysed by GC-FID:
- Capillary column, fused silica: (5%-Phenyl) - (95%-methyl) - polysiloxane Length 30m, internal diameter 0,32mm, film thickness 0,5µm
- Injection volum 1µl
- Carrier gas Helium 99,999%, Hydrogene flow 30 ml/min, air 380 ml/min, Helium (make-up gas) 49 ml/min, constant pressure 14,5 psi, split flow 32,4 ml/min
- Temperature begin 60°C, ramp 3°C/min up to 170°C, ramp 10°C up to 250°C

Detection limit 15 ppm for DPS and BDF respectively preferably using double determination.

### Analysis of DPS and BDF using ICP-OES

The sample of PEEK is prepared as follow. A PEEK sample (250 mg) is destroyed in nitric acid (3 ml water + 6 ml HNOs (trace metals grade), 65%) under pressure by the use of microwaves at a maximum temperature of 280°C. After this preparation the sample is diluted with 25 ml of water.

The diluted solutions are then analyzed by ICP-OES against standards made from certified sodium, potassium, and iron standard solutions.

Double determination can be performed with the known optical emission spectrometer ICP-OES Agilent 720

Based on said configuration the detection limit is 1 mg/kg.

With an enhancement of the sample mass (30g), filtration of the eluate and concentration to dryness and solving in water (2,5 ml) the detection limit will be at 1µg/kg.

### Extractant system using supercritical fluid

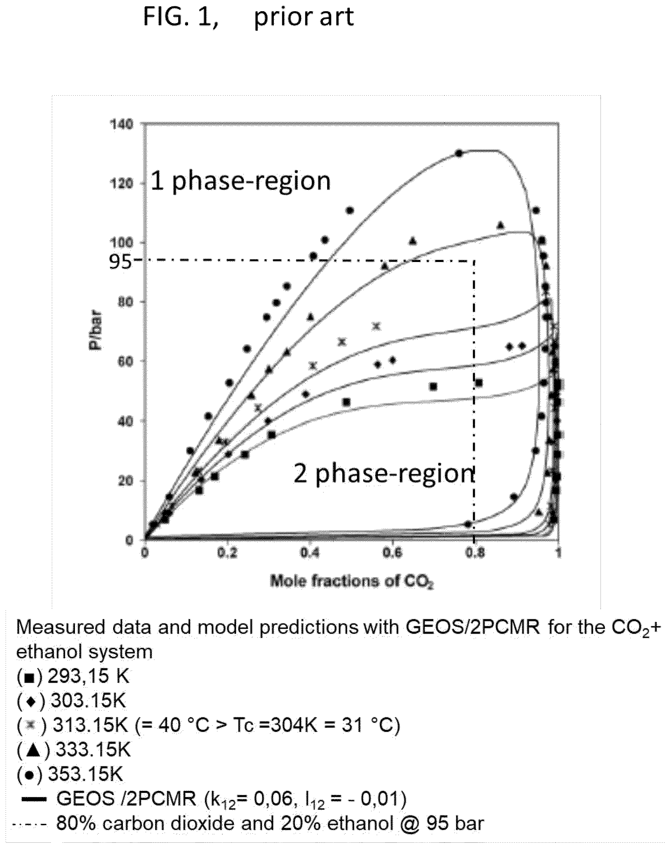

The use of supercritical fluid(s) for purification of PAEK polymers, the methods for purifying a polymer selected from the group of polyaryletherketones (PAEK) using supercritical fluid(s) according to this invention as well as the corresponding set-up of the system for purification using supercritical processes requires the knowledge of the thermodynamic properties of the involved phases. For this reason, both experimental data at supercritical conditions and known appropriate thermodynamic models from literature (see as example Fig. 1) for the estimation of these properties are needed to choose suited pressure and temperature conditions, which ensure a supercritical fluid and a monophasic system.

It was found that it needs first to be checked whether the solvents of the untreated polymer is miscible with the elected supercritical fluid. One preferred supercritical fluid is supercritical carbon dioxide. If e.g. supercritical carbon dioxide is suited the operating conditions as temperature and pressure need to be selected for the separation step with supercritical fluid i.e. scCO₂ and in the respective autoclave system to be above the respective supercritical points (T_{c}, p_{c}) of the respective fluid. Since solubility of impurities can be increased by increasing the pressure, higher pressures as the critical pressure p_{c} can be selected to improve efficiency of the purification while maintaining the temperature above T_{c} (31 °C for carbon dioxide) as well.

In case the solvent(s) are not miscible in the selected supercritical fluid as e.g. carbon dioxide then a co-solvent having a high solubility for the respective impurity can be added, whereof the amounts should be kept as low as possible unless in view of the high levels of impurities the co-solvent should be given in excess. In the following and in relation to FIG. 1 only binary systems are described. Experiments have shown that a suited binary system for solving impurities that occur at the production of PAEK polymers is a CO₂-co-solvent system, e.g. a CO₂/ethanol system. However, more complex patterns of phase diagrams are present in the case of binary systems, where different kinds of critical points occur depending on composition. Accordingly, it is required to have details of the phase behavior for a binary system such as a CO₂/ethanol system and it is required to check for a suited high pressure as well as temperature and mole fraction of CO₂ in the corresponding phase diagram to ensure the supercritical state and a monophasic system.

FIG. 1 shows the phase behaviour of a carbon dioxide-ethanol mixture as measured in experiments in comparison with values predicted by a model together with exemplary selected pressure and mole fraction of carbon dioxide (see dash dotted lines) usable for the purification method according to the present invention. The underlying graph was published by C. Secuiano et al. in the Journal of Supercritical Fluids 47 (2008), pages 109-116 "Phase behaviour for carbon dioxide+ethanol system: Experimental measurements and modelling with a cubic equation of state, (see Fig. 5 on page 114). FIG. 1 shows experimental data besides model data of said published article by C. Secuiano to represent the phase behaviour of a carbon dioxide - ethanol binary system. More particularly, FIG. 1 shows experimental data at different temperatures in dependency of the mole fractions of carbon dioxide and the pressure in bar respectively.

The highest curve shown in FIG. 1 has a maximum at a pressure at about 130 bar and corresponds to the highest temperature 353,15K. All solid lines correspond to the model data of the model GEOS/2PCMR using a cubic equation of state and having as parameters k₁₂= 0,06 and I₁₂ = - 0,01. Above each curve the mixture is in the 1 phase region and below the curve the mixture is in the 2 phase region. Further experimental data are shown in FIG. 1 with symbols. The following symbols correspond to the respective temperatures:
Circle - 353,15K; triangle - 333,15K, asterisk - 313,15K, diamonds - 303,15 K, and squares - 293,15 K.

The vertical dashed dotted line shows an exemplary mole fraction i.e. 80% carbon dioxide and 20% ethanol and the horizontal dashed dotted line a selected pressure at 95 bar which is suited for the purification method and system according to the present invention. If the temperature is selected to be e.g. 45°C then a monophasic system is encountered because the horizontal dashed dotted 95 bar line is well above the maximum of the model curve corresponding to the asterisk representing 313,15 K or 40°C. Experiments according to the present invention have shown that a temperature of 45°C and a pressure of 95 bar is suited for efficient purification if CO₂ is present at 80%. Respective experimental data for efficient purification of the solvent DPS with an carbon dioxide-ethanol binary system are shown in FIGs 5a or 5b (see circles for 80% carbon dioxide at 95 bar and 45°C).

The dotted dashed line is an example for a mole fraction (here 80%) for the step of separating the impurities using as supercritical fluid carbon dioxide and a co-solvent. However other mole fractions can be used as long as they are in the range of 0,5 vol.-% to 30 vol.-%, preferably between 5 vol.-% to 25 vol.-%, optionally between 10 vol.-% or 20 vol.-% and wherein pressure and temperature conditions are selected such that a monophasic mixture is formed. For instance, lower temperatures closer to 40°C or lower pressures could be chosen as long as a monophasic system can be ensured.

### System and methods for purifying PAEK polymers

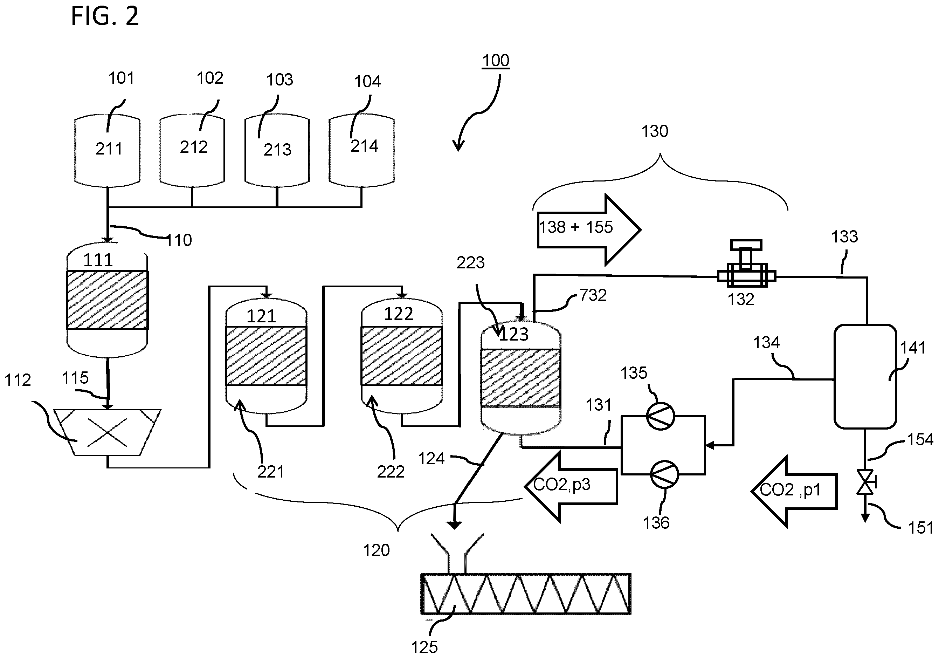

FIG. 2 shows a system 100 and method for purification of a polymer obtained in the presence of a first solvent consisting of diphenol sulfone (DPS, 214). Starting materials for the reaction to produce a PAEK polymer are in containers 101 and 102 and provide suitable biphenols such as hydroquinone (HQ, 212) and suitable aromatic dihalogen compounds, whereof an example is 4,4 diflurobenzophenone (BDF, 211). Via the inlet conduits 110 the first solvent diphenyl sulfone (DPS) from container 104 and alkaline metal carbonate 213 from container 103 are added to the starting materials 211, 212 and then led into the reactor 111. As a typical alkaline metal carbonate 213 sodium carbonate may be used. Other suitable alkali metal and alkaline metal carbonates derived from lithium, potassium, rubidium, magnesium, calcium, strontium or barium may be used instead. However, sodium carbonate or bicarbonate are usually preferred because they are less expensive.

The educts or starting materials 211, 212, first solvent 214 and alkaline metal carbonate 213 are loaded in the reactor 111 and heated up to the reaction temperature in the range of about 300°C - 350°C. The reaction according to formula (1) is carried out in the reactor 111 in molten DPS (melting point 123 °C) as a solvent.

The reaction product composition is according to an example approximately 28 % PEEK, about 65% DPS, about 500 ppm BDF and salts comprising NaF, Na₂CO₃ (about 8%). The reactor product mixture is led via the outlet 115 to a grinder 112. There it is cooled down using water and ground to small granules or powder.

From the grinder 112 the crude polymer products enter the refining system 120 for the purification method beginning with the first refining step 221 in the first refining unit 121 being a container. The first refining unit 121 is configured to refine in method step 221 the polymer using a second solvent, which can be ethanol but can be any solvent suited to solve impurities such as the first solvent DPS. In contrast to conventional ethanol refining methods, which use 7 to 10 or more washings steps or washing cycles or passages significantly less washing steps that is to say less than 5, preferably less than four, preferably less than three and more preferably less than 2 washing steps are performed in the first refining step 221. Accordingly, the first refining unit 121 is in particular configured to remove extra solvent from the crude polymer such as DPS.

After the first refining step 221 a second refining unit 122 or container is provided to perform a second refining step 222 to remove salts such as the by-products NaF and Na₂CO₃, respectively. The second refining unit 122 uses water to remove the salts from the solvent treated polymer.

In addition to the refining steps 221, 222 a new separation step 223 of impurities using supercritical fluid is provided, in which fluid is pressurized in an autoclave system, which consists at least of an autoclave or pressure vessel 123. It is noted that there can be remaining portions of water and/or ethanol from the refining steps 121 and 122 respectively, which can both act as a co-solvent for supercritical separation/extraction. However, it is preferred to add fresh co-solvent such as ethanol to guarantee the high purity of the end product. In case carbon dioxide is used as supercritical fluid it is also noted that remaining water from previous steps, will usually be removed because supercritical carbon dioxide dries the polymer mixture.

As can be taken from FIG 2, the pressure vessel 123 is on the one hand part of the refining system 120 and on the other hand part of a subsystem 130, which forms a closed loop recycling system for CO₂. The PEEK mixture enters the subsystem 130 via container or pressure vessel 123, which is configured for separation of remaining impurities with scCO₂. After the impurities are separated in step 223 from the polymer through contact with a supercritical carbon dioxide the supercritical CO₂ with the solute 155 is led to the recycling subsystem 130 via outlet 732 (see arrow CO₂ 138 and solute 155 above respective conduit). After the separation or extraction ultrapure PEEK can be retrieved from the pressure vessel 123.

The polymer is subjected to the supercritical fluid CO₂ at a pressure in the range of at least 74 bar and 180 bar and at a temperature in the range of at least 31°C and 75°C, preferably 31°C, more preferably 45°C. Ethanol or other suitable fluids can also be used as a supercritical fluid instead of scCO₂. As noted before due to the advantages of CO₂ usually CO₂ is used as a main extractant and if a co-solvent is needed such as ethanol, said co-solvent is only added in an amount not exceeding 30%. Experiments have shown that pressures at 95 bar and temperatures at 45 °C are suited to generate monophasic systems, when a mixture of 80% CO₂ and 20% ethanol is used in the separation step 223.

In the following, the subsystem 130 forming a closed recycle loop for CO₂ is described. The subunits as pumps 135, 136, vessel 123, container 141 and other units as valves of the system 130 are in fluid communication via respective conduits and valves. For instance, the low pressure (p1) conduit 134 delivers recycled carbon dioxide from the container 141 to e.g. pump 136 (see arrow CO2, p1). The CO₂ is stored in its liquid phase in the container 141. The subsystem 130 contains pumps 135 and 136 to pressurize the CO₂ to supercritical conditions, wherein high-pressure conduit 131 delivers high pressure carbon dioxide (see arrow CO2, p3 directed to the pressure vessel 123) to the pressure vessel 123. Further, the CO₂ is heated to adjust the temperature above the critical temperature in the feed line 131.

The supercritical extractant, i.e. scCO₂, then passes into the pressure vessel 123 for extraction, where it rapidly diffuses into the solid polymer matrix (e.g. in form of PEEK pellets or powder) and dissolves the impurities to be extracted. The dissolved impurities or solute 155 are swept with the carbon dioxide 138 from the pressure vessel 123 via the outlet 732 into a pressure reduction unit 132, in which the pressure is reduced to a lower pressure (p1) and simultaneously the temperature is decreased such that the CO₂ loses its solvent properties. In the subsequent container 141, which serves as separator, the extracted material 155 can be separated as precipitation 151 which settles out and can be removed by a suited outlet 154. Once the impurities are removed as precipitation 151 the valve of the outlet 154 can be closed and the container 141 can be used to store low pressure CO₂ (p1).

The CO₂ can then be further recompressed in the recycling loop. Alternatively, the CO₂ can be discharged to the atmosphere. In the recycling loop, recovered low pressure CO₂ is again sent to pumps 135 and 136 for compression and heating to supercritical conditions in order to return to pressure vessel 123 to provide high-pressure scCO₂ to extract the impurities from newly provided polymer. After the extraction, the pressure reduction in unit 132 and separation of extracted material from CO₂ is repeated in container 141 to provide recycled CO₂.

In this setup of the subsystem 130 a high flow rate of scCO₂ is possible. In experiments for purifying PEEK polymer with a bulk density of PEEK pellets of 0,3 g/ cm³ flow rates of 30g scCO₂ to 40 g scCO₂ per minute per g polymer have been used. In experiments typical sizes of a pressure vessel 123 have been between 400 mL and 50 mL, which were filled up to 80% with PEEK polymer. It was possible that using the system 100 including an autoclave system with a pressure vessel 123 configured to separate impurities 223 could generate ultrapure PEEK polymers.

After the separation by contacting the polymer with supercritical fluid, preferably supercritical carbon dioxide (scCO₂) the purified polymer, which is substantially free of impurities, can be recovered from the pressure vessel 123 via an outlet 124 and optionally led to a granulator 125. In the granulator PEEK granules can be produced which are one of the most widely used PEEK material. Alternatively, other forms of PEEK material can be produced if required.

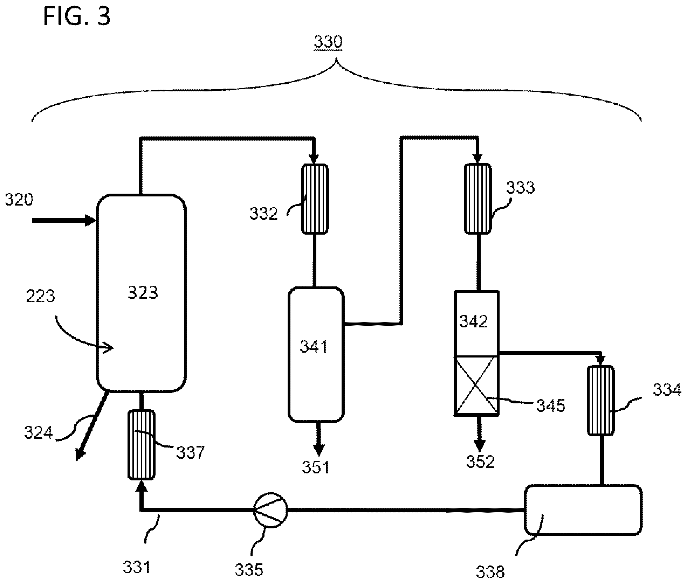

FIG. 3 shows an alternative subsystem 330, which can be implemented in the system of FIG. 2, wherein the subsystem 330 having two separators 341, 342 would replace the subsystem 130 having only one container 141 for separation. Further, the pressure vessel 123 is replaced by pressure vessel 323. The input line 320 of the pressure vessel 123 is in fluid communication with the second refining unit 122 of the refining system 120 of FIG. 2.

In the subsystem 330, carbon dioxide (CO₂) is stored in its liquid form in storage vessel 338. From there a high-pressure pump 335 compresses the CO₂ and is then pumped to a heating unit 337, where it is heated e.g. by a heat exchanger, to supercritical temperature conditions. It then passes into the extraction or pressure vessel 323.

After the extraction or separation 223 of impurities from the PEEK material, the extracted impurities need to be again separated from the extractant carbon dioxide. In the subsystem 330 a two-stage separation is provided. First, the pressure is reduced in the first evaporator 332 and then to separate a first impurity or first fraction 351 in the subsequent first separator 341. Further downstream a second evaporator 333 and a second separator 342 is provided in order to separate a second fraction 352 or impurity from partially purified CO₂. When the separation of the second fraction 352, which may be another impurity from the polymer material is complete, a control valve (not shown) may be closed and the clean carbon dioxide is routed into the condenser 334. Depending on how the pressure and temperature conditions are regulated different fractions can be produced and then be removed via the respective outlets (see arrows at bottom of each separator 341 and 342).

Optionally, one or more separators may comprise a charcoal or an activated carbon filter 345 for improving the separation process and providing better purified carbon dioxide. In FIG. 3 the second separator 342 comprises an activated carbon filter 345, which needs to be replaced or recycled regularly in order to ensure sufficient absorption capacity of the activated carbon filter 345.

The purified CO₂ is led from the second separator 342 through a condenser 334 to produce liquid CO₂, and then storage vessel 338 to be used again later. Once the ultrapure PEEK is removed from pressure vessel 323 and PEEK with remaining impurities is introduced, then the liquid CO₂ can be pumped again from the storage vessel 338 through high-pressure pump 335 and high- pressure conduit 331 into the heating unit 337 for temperature adjustment (e.g. heating to temperatures well above the critical temperature of 31°C), before passing into extraction vessel 323. Supercritical properties are selected according to experimental or literature data and are usually chosen above the critical temperatures and pressures in order to surely maintain the best properties for purification i.e. combined properties of gases and liquids. The higher the chosen pressure the better a stepwise separation in the carbon dioxide CO₂ recycling loop can be performed. After the extraction or separation 223 of impurities, the recycling loop of carbon dioxide begins again.

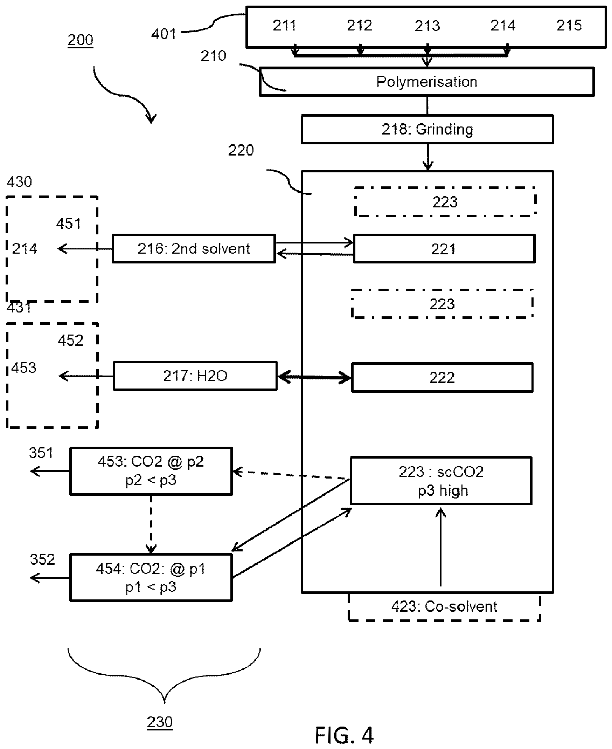

FIG. 4 shows a flow chart of an exemplary embodiment of a method 200 for purifying a polymer selected from the group of polyaryletherketones (PAEK). Fist in step 401 the starting materials are provided. Said starting materials 4,4-diflurobenzophenone BDF 211, hydroquinone HQ 212, Na₂CO₃ 213, diphenyl sulfone DPS 214 and optionally other additives 215 are loaded in a reactor to be heated up and stirred thoroughly for the polymerisation step 210.

The resulting mixture of the polymerisation step 210 is a mixture of PEEK, DPS solvent and side products as salts including NaF. This crude PEEK mixture is discharged and cooled down and finally ground 218 in a grinder: During the method step of grinding 218 small granules and/or powder are generated and optionally water is added for cooling the grinding process.

The crude polymer mixture then enters the refining process 220. In the refining step 221, a second solvent 216 is added to remove particularly one of the impurities comprising the first solvent DPS 214. In the optional recycling step 430 the second solvent 216 such as e.g. ethanol can be recycled by using distillers. This optional recycling step 430 comprises a separating step 451 via distillers to produce as a fraction the first solvent DPS 214 besides the second solvent 216, respectively. Said recovered DPS 214 can be reintroduced as starting material in step 401, whereas the distilled second solvent can be recycled in step 221.

Alternatively fresh second solvent 216 such as ethanol can be added during the refining step 221 in order to avoid impurities are reintroduced by incomplete recycling 430. By using fresh second solvent 216 it is avoided that remnants of e.g. the first solvent (DPS, 214) are reintroduced into the refining step 221. It is noted that refining step 221 using a second solvent only requires one washing cycle or step, optionally two or three washing steps or cycles, due to the combination with the separation step 223 for separating impurities from the polymer through contact with a supercritical fluid.

There is no fixed order when said separating 223 with a supercritical fluid needs to be done. It is only required that this separating 223 with supercritical fluid is done at least once in the refining process 220. One option is to use the supercritical fluid as last refining step (indicated as solid box 223: scCO2). The pressure p3 is high and chosen to be equal or above supercritical pressure of carbon dioxide or of a binary system if a co-solvent is used together with carbon dioxide as main component. The higher the pressure is regulated the solvent properties of the supercritical fluid are expected to increase.

Optionally the supercritical fluid as scCO₂ can be used for separating the impurities from the crude PEEK material i.e. as first refining or separating step. This has the advantage that water used during grinding 218, can be dried by using the supercritical carbon dioxide. Thus, the ground polymer needs to be dried less in order not to introduce large amounts of water into refining step 221 and thus into the second solvent which is preferably ethanol. Further, this configuration has the advantage that the supercritical fluid can be used as a single step without conventional refining steps to remove the impurities. This can be realized by providing an open loop operation wherein the supercritical fluid as scCO₂ with or without co-solvent flows continuously until approximately all impurities are removed from the system. In this open loop fresh carbon dioxide and/or co-solvent may be added to improve the purifying performance.

Alternatively, the supercritical fluid can be used after the refining step 221 with the second solvent. This optional method steps are marked with a dashed box line (see method step 223, before step 221 and 222, respectively.

The refining step 222 using water is required to remove at least parts of the salts. The water may optionally be recycled in step 431. For recycling the water the salts such as NaF 453 can be removed by separating step 452 such as evaporation and/or centrifugation. Alternatively or additionally fresh water 217 can be introduced into refining step 222. As noted above remaining water from step 222 can be used as co-solvent or dried in the subsequent separating step 223.

As noted before the order of the refining steps may be altered. However, one potential order in the refining process 220 is as shown in the system of e.g. in FIG. 2 as follows:
First refining step 221 with a second solvent, which is added to the crude PEEK mixture
Second refining step 222 with water; and
finally in step 223 separating the remaining impurities from the polymer with a supercritical fluid such as CO₂.

In the above order approximately, 75% of DPS is removed after the first refining step 221 using ethanol and similarly a substantial amount of salts is removed in the second reefing step. The remaining impurities are successfully removed in step 223 to achieve medical grade PEEK.

Optionally a co-solvent 423 can be added to carbon dioxide in step 223 (see dashed box with reference number 423), preferably the co-solvent is provided in amounts up to 30% with regard to the total amount of solvent. If a binary system of carbon dioxide and a co-solvent is selected to serve as supercritical fluid, then the pressure p3 as well as a temperature has to be chosen equal or above the critical conditions (p_{c} and T_{c}) such that a monophasic system is achieved. In this way supercritical conditions for the said binary system are achieved.

Alternatively to the operation of the purification method in a binary system an extended co-solvent phase can be used as extractant system, wherein before the step of separating the impurities to the carbon dioxide the co-solvent is added in excess such that at supercritical conditions biphasic mixture of the extractant system is formed. That is to say there would be the following three phases during the step 223 of separation of the impurities using supercritical fluid:
1) supercritical fluid CO₂ and co-solvent are in one phase (monophasic)
2) extended co-solvent phase (e.g. ethanol is liquid below boiling point of ethanol 78 °C)
3) polymer phase (solid)

The extended co-solvent phase is advantageous, when one or more impurities are very high.

The subsystem 230 is a recycling loop for the supercritical fluid and is schematically shown for carbon dioxide. The recycling mode may be optionally used. In the recycling subsystem 230 supercritical carbon dioxide comprising solutes is not discarded but collected downstream the pressure vessel or autoclave and its pressure decreased to p1 (from high pressure p3 -scCO2 to p1 to generate CO₂ in liquid form). In the recycling mode 230 the pressure p3 (high) of the CO₂ can be optionally reduced stepwise to a pressure p2, which is below the operating pressure p3 for the supercritical fluid (scCO₂) in order to separate (step 453) a first fraction 351 from the carbon dioxide. Further, optionally a second fraction 352 can be separated (step 454) by further lowering the pressure to a pressure p1, which is lower than pressure p2 and p3, respectively. Depending on how the pressure and temperature conditions are regulated different fractions can be produced. Via the separations 453 and 454 the carbon dioxide is purified. For reuse the purified carbon dioxide of low pressure (here p1) is compressed to high pressure scCO₂ (@p3, which is equal or above the supercritical pressure of the fluid).

FIG: 5A and FIG: 5B show the results of experiments of separating the polymer with supercritical fluid. In order to compare the efficiency of supercritical carbon dioxide alone and the supercritical carbon dioxide with a co-solvent experiments have been performed with and without the co-solvent ethanol. Experiment 1 (see upper curve with diamonds) separated the impurities from the polymer through contact with supercritical carbon dioxide and conducted at 45°C and 95 bar. Experiments 2 to 4 are using a co-solvent. Experiment 2 was conducted with a 5 wt.-% ethanol - scCO₂ mixture, whereas Experiments 3 and 4 were conducted with a 20 wt.-% ethanol-scCO₂ mixture. Experiment 1 to Experiment 3 were conducted at 45°C and 95 bar, whereas Experiment 4 was conducted at a higher temperature i.e. 70 °C and higher pressure 180 bar than e.g. Experiment 3.

FIG. 5a shows the graph of results of the above described four experiments, examining the concentration of BDF in ppm in dependence of the processing time in the presence of scCO₂ or a binary system further comprising the co-solvent ethanol. The first experiment shows a BDF removal of 59% at after 8 hours of processing with only scCO₂. At the same pressure and temperature conditions (95 bar and 45°C) the removal is significantly better and faster if the co-solvent ethanol is used. After 8 hours 95% of BDF is removed using 5 wt.-% ethanol, whereas about 100 % are removed if 20 wt.-% ethanol is used. It is noted that values less than 10 ppm could not be measured and are shown as zero due to the method detection. As a result the hybrid process of extraction using both scCO₂ and co-solvent ethanol the BDF could be removed more efficiently than conventional methods.

FIG. 5b shows a graph of results of the above described four experiments, examining the removal of the impurity diphenyl sulfone DPS, which is used as first solvent in the polymerisation of the polymer. Experiments 3 and 4 were conducted with 20 wt.-% ethanol-scCO₂ mixture and are the already very efficient after 4 hours processing time. The Experiment 3 which was conducted at 45°C and 95 bar has about 735 ppm DPS after 4 hours, whereas Experiment 4, which was conducted at 70°C and 180 bar, the concentration of DPS at 70°C and 180 bar dropped down to approximately 45 ppm after four hours of operation. Afterwards, the remaining amount in sample was outside of the method detection limit, (which is less than 10 ppm). Accordingly, the best results were achieved at Experiment 4 and can provide a medical grade PEEK, which should have impurities reduced to less than 10 ppm, preferably 0,5 ppm.

Thus, the new hybrid approach with scCO₂ with ethanol as co-solvent provides a way to address the existing bottleneck in the purification process, which is the ethanol refining process due to numerous of washing steps of minimum 7 to 10. For all experiments the number of washing steps in the first refining step with ethanol could be reduced to only 3 washing steps and after a final separation step using of scCO₂ with ethanol as co-solvent medical grade PEEK can be generated reliable.

The below table 1 summarizes the most efficient experiments 3 and 4 described above and shown in FIGs 5a/b, wherein the PEEK was pre-treated with ethanol in a refining step with three washings steps to achieve a partial reduction of the DPS prior to the separation of remaining impurities with scCO₂. Besides the DPS and BDF concentration or content over processing time additional parameters as crystallisation Temperature Tc and the sulphur content S are given. The processing conditions for the separation with scCO₂ and 20 wt.-% ethanol are listed in column 2 and the same as given above for experiment 3 and 4 (see legend for circles and squares in FIG. 5a). Further Experiment 5 in table 1 is shown, which has the same conditions as experiment 3 i.e. with scCO₂ and 20 wt.-% ethanol at 45°C and 95 bar. In contrast to the other experiments experiment 5 uses as PEEK to be purified a commercially available PEEK powder under the name VESTAKEEP ^{®} 4000P, which is a regular product of Evonik Operations GmbH.

**Table 1:**

| Sample | Processing conditions | Time of processing [h] | DPS content [mg/kg] | BDF, content [mg/kg] | Tc [°C] | S, content [mg/kg] |
|---|---|---|---|---|---|---|
| Exp 3 (Sample after 3rd wash) | 45°C, 95 bar | 0 | 6178 | 313 | | |
| | | 4 | 735 | 22 | 283 | |
| | 20 wt.-% Ethanol + scCO2 | 8 | 88 | 12 | 283 | |
| | | 12 | 20 | <0,001 | 276 | |
| | | 16 | 0 | <0,001 | 277 | 47 |
| Exp 4 (Sample after 3rd wash) | 70°C, 180 bar | 0 | 5845 | 295 | | |
| | | 4 | 45 | <0,001 | | |
| | 20 wt.-% Ethanol + scCO2 | 8 | <0,001 | <0,001 | 278 | 41 |
| | | 12 | <0,001 | <0,001 | | 43 |
| | | 16 | <0,001 | <0,001 | 274 | 38 |
| Exp 5 (Sales lot) | 45°C, 95 bar | 0 | 340 | 468 | 284 | |
| | | 4 | 52 | 24 | | |
| | 20 wt.-% Ethanol + scCO2 | 8 | 18 | <0,001 | | |
| | | 12 | 15 | <0,001 | | |
| | | 16 | <0,001 | <0,001 | 283 | |

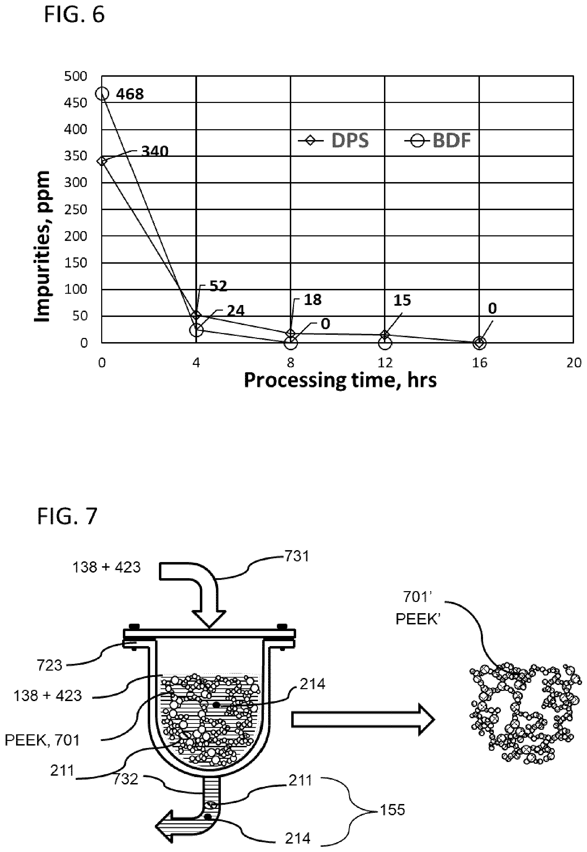

The table shows that in the temperature T_{c} a slight decrease is observed due to the removal of DPS. The experiments have shown that all free sulphur (S, last column) could be removed because the values were below the detection limit. The Experiment 5 shows that the commercially available PEEK has lower starting DPS content (340 ppm or mg/kg) than the Experiments 3 or 4, when starting at 0 hour (see time of processing) the separation with scCO₂ and 20 wt.-% ethanol. The values <0,001 of BDF and DPS respectively are below the detection limit if measured with ICP-OES using enhancement od the sample mass as described above in analysis methods. After the first 4 hours the most efficient decrease can be observed. The results for the DPS and BDF content of Experiment 5 are illustrated over time in FIG. 6.

FIG: 6 shows a graph comparing the results of experiments of DPS & BDF removal with a 20 wt.% ethanol scCO₂ mixture conducted at supercritical conditions selected to be a pressure of 95 bar and a temperature of 45°C. The results show that both DPS and BDF are removed effectively. After the first four hours of processing, there was a sharp decrease in the observed concentrations (DPS: from 340 to 52 ppm; BDF: from 468 to 24 ppm). The BDF removal was sharper compared to DPS in this experiment, because the starting DPS content is comparatively lower in the commercial PEEK VESTAKEEP ^{®} 4000P than in the PEEK of experiments 3 and 4, which was only three times washed with ethanol to remove DPS. This shows the efficiency of the process and that the process can also be used to purify conventionally produced PEEKs to achieve medical grade PEEK or any other high value applications.

Summing up the experiments, on the one hand the new method can be used to provide a distinguished competitive advantage over the conventional solvent extraction process. On the other hand, the hybrid approach using supercritical fluid to improve the purity of conventionally produced PEEK of technical grade in order to generate medical grade PEEK. This reduces the consumption of pure ethanol, which would be needed for extra washings with pure ethanol to further refine the technical PEEK to an ultrapure PEEK product. Thus, the new inventive purification process has proven that relatively small amounts of DPS and BDF (as e.g. present in PEEK VESTAKEEP ^{®} 4000P) can be removed by using scCO₂ with 20 wt% ethanol.

FIG. 7 shows schematically the use of scCO₂ 138 optionally with a co-solvent 423 for purification of PEEK 701. A pre-treated (in refining steps as described before) or commercially available PEEK 701 can be fed in the pressure vessel 723. The PEEK 701 contains impurities such as BDF 211 and DPS 214. Via the inlet 731 scCO₂ 138 with a co-solvent 423 is added. To remove small amounts of impurities the co-solvent 423 should be added in the range of 0,5 vol.-% to 30 vol.-%, preferably 5 vol.-% to 20 vol.-%. The co-solvent is selected from the group of ethanol, acetone or ethyl acetate.

The impurities or solute 155 are removed via the outlet 732. Once the contents of the impurities are below the detection limit or less or equal than about 15 parts per million (ppm) the ultrapure PEEK' 701' can be retrieved from the pressure vessel. If experiments have shown that after a specific time at supercritical conditions a medical grade PEEK is achieved the time can also be used as control parameter. For example, if the step of separating the impurities is between 8 hours and maximum 12 hours in the presence of a co-solvent at 20 %, the concentrations of the impurities of the polymer to less or equal than about 15 parts per million (ppm) to about 0 ppm.

The outlet 732 of the pressure vessel 723 can fluidly connected with a recycling loop as shown in the subsystems 130 (see FIG. 2) and 330 (see FIG. 3), respectively.

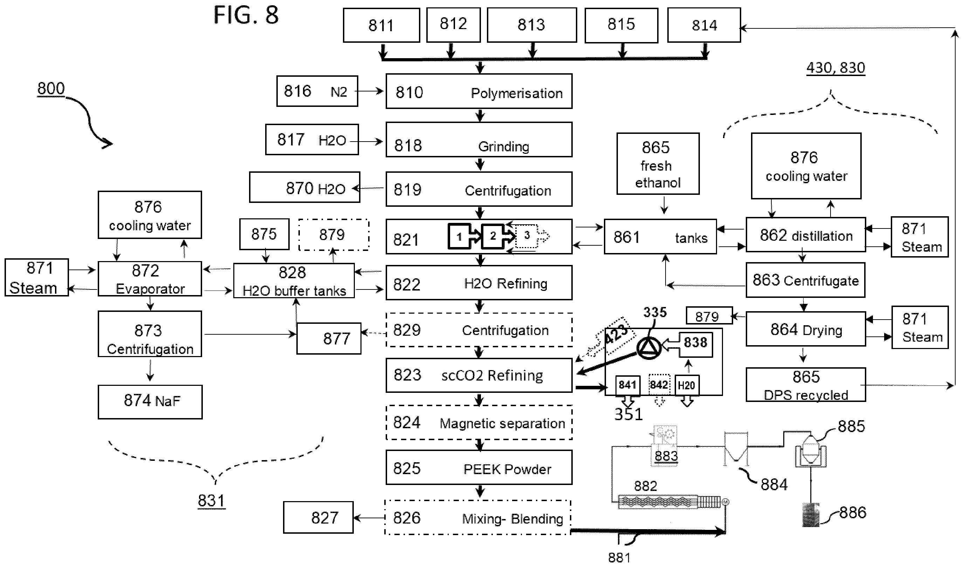

FIG. 8 shows a flow chart of an exemplary embodiment of a method 800 for purifying a polymer selected from the group of polyaryletherketones (PAEK). The polymer is prepared by reacting starting materials 4,4-diflurobenzophenone (BDF) 811, 1,4-benzenediol (hydroquinone; HQ) 812, Na₂CO₃ 813, diphenyl sulfone (DPS) 814 and other additives 815 which enter the polymerisation stage 810 preferably at a temperature of at least 300°C. During the step 816 Nitrogen (N₂) is added in order to inert the system.

Following this, the mixture is discharged from the reactor to enter the grinding stage 818, which preferably occurs under H₂O addition 817 to cool down the grinding process 818. The PEEK can be ground to produce small granules (e.g. mean particle size between 2 to 3 mm) or PEEK powder by passing the PEEK through e.g. a hammer mills. The resulting particle distribution of the PEEK powder may yield to a wide spread, which includes fine grade polymer material in various sizes with mean particle sizes as small as 10 to 45 microns and as large as 75 to 500 microns, preferably 25 to 80 or 90 microns, or 35 to 50 microns. The smaller the mean particle size of the powder the more efficient the subsequent refining step because the surface which can be brought into contact with the solvents and extractants can be increased. The water H₂O added in step 817 can be separated from the crude PEEK by centrifugation 819 and at least part of the added cooling water can be removed in step 870.

In the following steps 821 to 823 the refining process of the polymer begins. In the shown embodiment of the method 800 the first refining step is a refining step 821 with a second solvent. The refining step 821 can be performed with ethanol or other suited solvent. In the refining step 821 there are 1 or 2 or optionally 3 ethanol washing step(s). If there are more than 1 washing steps each additional washing step may be in a sub-container, herein a counter-current is applied. That is to say a one-stage ethanol washing or 2-stage ethanol washing is preferred because there only 1 or 2 containers are required. Optionally a 3-stage ethanol washing with three containers as indicated by the dotted arrow 3 can be provided. In this way the conventional seven- to 10 or more stage ethanol washing process can be replaced by a refining step 821 that advantageously requires less than half the number of conventional ethanol washing steps and preferably only 1 washing step. Thus, the solvent to be used can be reduced significantly.

The required ethanol is fed from ethanol tanks 861 and optionally circulated back from recycling 430 and respective subsystem 830 (see dotted parenthesis 430, 830 on right side). Alternatively, or additionally to ethanol from the recycling subsystem 830 said ethanol tanks 861 can be fed with fresh ethanol 865, which is inserted on demand into the ethanol tanks 861. If ethanol is recycled in the recycling subsystem 830, said recycling 430 can be combined with a recycling of the reaction solvent DPS.

The recycling 430 comprises a distillation step 862 using ethanol distillers such as one or more distillation columns. During the distillation 862 steam 871 is used to heat the liquid mixture containing the second solvent consisting of ethanol. Steam distillation 862 allows the separation of ethanol from impurities with lower boiling points such as water and/or from impurities that have different vapour pressures than ethanol. The steam produced by boiling or heating the mixture is condensed back into a liquid using cooling water 876. The recycled and liquid ethanol can be fed back in the ethanol tanks 861. Further, after the distillation 862 a centrifugation 863 is performed to obtain DPS 865 ("DPS recycled"). After the centrifugation the DPS is finally dried 864 under vacuum 879 and remaining water is removed as steam in step 871.

The DPS 865 which has already been used for the production of PAEK, preferably polyetheretherketone (PEEK), can be reused (see arrows directed to starting materials DPS 814 to provide an economically viable process. The recycled DPS 865 can gain serve as high temperature reaction solvent for the production of PEEK if it is fed back as starting material or is optionally mixed with virgin DPS 814 in order to maintain a high purity DPS for the polymerisation 810 of PEEK. The DPS should meet impurity limits that should not surpass a maximum permissible content of an impurity. In this recycling process at least one impurity threshold relating to the extraction solvent i.e. the second solvent as ethanol should not be exceeded. Accordingly, the content of the second solvent in the recycled DPS should contain less than 1 % by weight, more preferably less than 0,5 % by weight of the DPS.

It is noted that the second solvent i.e. ethanol is also required to be highly pure in order to be reintroduced into the ethanol tanks 861 and then into the refining step 821, in order to avoid reintroduction of significant amounts of impurities in to the refining process.

The PEEK, which is pre-treated with ethanol, is refined with water in the second refining step 822. The second refining stage is used to remove the residual salts from the polymer by at least one washing step, wherein about 80% are preferably removed. Alternatively, a 2 stage or optionally a 3 stage water refining can be applied to further increase the removal rate of salts. The water is provided from water buffer tanks 828, which may be fed by fresh water 875 and can optionally be under vacuum 879. After the water refining 822 there can optionally be a centrifugation 829 of the PEEK applied in order to better separate the water from the PEEK. The retrieved wet PEEK from centrifugation may then optionally be dried by applying vacuum (not shown). However, these known drying processes of the prior art (centrifugation 829 and vacuum drying) in order not to introduce large amounts of water into the subsequent process step can be skipped or at least partially reduced, if as subsequent separation step 823 supercritical fluid is used for separating the remaining impurities, that can be used for drying.

The water from refining step 822 and optionally recycled water 877 separated from the PEEK by centrifugation 829 can optionally be recycled in the method steps 831. The wash water is introduced in a waste water evaporator 872 for removing impurities and especially salts, Steam 871 is led into a steam heat exchanger to heat the wash water till it evaporates into vapor and leaves concentrated liquid or salt behind as a solid. Other suitable systems as gas or oil powdered evaporators can be used instead a steam powered evaporator can be used. Since the boiling point of water is lower compared to the boiling point of salt salts such as NaF can be separated through the evaporation process. Cooling water 876 may optionally supply a condenser in order to condense the evaporated water and depending on whether it is desired to recycle the water in method steps 831 the condensate from the vapor can be refluxed through a line (schematically shown by arrow directed from evaporator 872 to buffer tanks 828) for reuse in the buffer tanks.

Further water can be retrieved from centrifugation 873 resulting in separated salt consisting of NaF 874. From the centrifugation 873 step water 877 may be separated and then optionally returned into returning the water buffer tanks 828. Thus, the main salt NaF can be efficiently separated.

According to the present invention, the purification method of PEEK, which is pre-treated with ethanol and water, comprises an additional purification step 823 for further separating the impurities from the polymer mixture through contact with a supercritical fluid, for example scCO₂. Optionally a co-solvent 423 such as ethanol can be added to the scCO₂. As already described with regard to FIG 3 the carbon dioxide can be recycled in a subsystem 330 and at least one fraction 351can be separated in a separator. Optionally one more fraction (see dotted down arrow indicating another separator) or water (down arrow H₂O) can be separated from the CO₂. A high-pressure pump 335 compresses the recycled CO₂ to supercritical pressure and is then pumped to a heating unit 337 (not shown in FIG: 8; see FIG. 3), where it is heated to supercritical temperature conditions. It then passes into the extraction or pressure vessel to perform the separation 823 through contacting the PEEK with a supercritical fluid. It is noted that water from the previous water refining 822 can be advantageously dried using the scCO₂ such that the drying of the water washed PEEK can be reduced.

After step 823 in order to further purify the PEEK for medical application optionally a magnetic separation 824 can be performed. As magnetic materials for purification for medical applications iron oxide nanoparticles are generally recognized as safe (GRAS) and have been approved by the US Food and Drug Administration (FDA) for in vivo applications.

The multistage purification process comprising the use of supercritical fluid results in ultrapure PEEK powder 825 of medical grade, having concentrations of remaining impurities in the polymer of less or equal than about 15 parts per million (ppm) to about 0 part per million (ppm). The PEEK 825 in powder form may still need to be dried if the end product is still wet. Further, the PEEK powder can optionally be mixed or blended (step 826) can be packaged 827 for delivery.

If required further processing steps can optionally be performed. The PEEK can be further delivered via feed line 881 to the extruder such as a screw extruder 882 for extruding the PEEK. Downstream of the extruder the PEEK can be made into pellets through pelletizer 883. Optionally a magnetic separation 884 and/or blending 885 can follow. Finally, granule packaging 886 follows in order to be delivered.

By using this new approach of the refining process the bottleneck of former multi stage refining processes (e.g. 10-stage refining in the ethanol wash) can be addressed and the capacity can be increased, while the cost factor in the whole process is similar or less than in prior art purification processes. The new refining approach combines the synergies of solvent extraction and extraction in a hybrid configuration. By reducing the washing steps in the first and second refining step the amount of solvent and/or water and energy and time needed for the refining and associated costs can be significantly reduced.

It can be seen from the above that the use of scCO2 optionally with a co-solvent according to the present invention provides a PEEK in the desired high level quality such that the product can be used for medical devices such as implants. This medical grade PEEK is achieved without consuming large amounts of solvent and without the need for 7 to 10 washing steps in ethanol or water refining steps.

### Terms, acronyms and reference signs as used herein include:

- BDF: difluorobenzophenone
- CO₂: carbon dioxide
- scCO₂: supercritical carbon dioxide
- DPS: diphenylsulfone (first solvent)
- H₂O: water
- HQ: Hydroquinone
- N₂: nitrogen
- PAEK: PolyArylEtherKetone
- PEEK: PolyEtherEtherKetone
- SFE: Supercritical Fluid Extraction
- WW: waste water
- p1: low pressure
- p2: intermediate pressure <p3 and > p1
- p3: high pressure

- 100: system
- 101: first container
- 102: second container
- 103: third container
- 104: fourth container
- 110: inlet conduits
- 111: reactor for polymerisation
- 112: grinder
- 115: outlet of reactor

- 120: refining system
- 121: first refining unit
- 122: second refining unit
- 123: pressure vessel / autoclave
- 124: outlet of pressure vessel for polymer
- 125: granulator

- 130: subsystem for recycling
- 131: feed line for high pressure (p3) carbon dioxide(see also arrow CO2, p3)
- 132: pressure reduction unit
- 134: conduit for low pressure (p1) carbon dioxide (see also arrow CO2, p1)
- 135: first pump
- 136: second pump
- 138: carbon dioxide
- 141: container/separator
- 151: precipitation
- 154: outlet
- 155: solute(s)/ impurities

- 200: method
- 210: polymerisation step
- 211: BDF(starting material)
- 212: HQ (starting material)
- 213: alkaline metal carbonate
- 214: first solvent (DPS)
- 215: additives
- 216: second solvent
- 217: water
- 220: refining process
- 221: first refining step
- 222: second refining step
- 223: separation using supercritical fluid

- 230: recycling subsystem

- 330: recycling subsystem
- 323: pressure vessel
- 324: outlet pressure vessel
- 331: conduit
- 334: condenser
- 332: first evaporator
- 333: second evaporator
- 335: pump
- 337: heating unit
- 338: storage vessel
- 341: first separator
- 342: second separator
- 345: activated carbon filter
- 351: first fraction
- 352: second fraction

- 401: providing starting materials
- 423: co-solvent
- 430: recycling step
- 451: separating step
- 452: separating step

- 701: crude PEEK
- 701': purified PEEK'
- 723: pressure vessel
- 731: inlet to pressure vessel
- 732: outlet of pressure vessel

- 800: method
- 810: polymerisation stage
- 811: 4,4-diflurobenzophenone (BDF)
- 812: 1,4-benzenediol hydroquinone (HQ)
- 813: Na₂CO₃
- 814: diphenyl sulfone (DPS)
- 815: additives
- 816: providing inert atmosphere (nitrogen, N₂)
- 817: adding cooling water
- 818: grinding process
- 819: centrifugation
- 821: refining step using second solvent
- 822: refining step using water
- 823: separation step using supercritical fluid
- 824: magnetic separation
- 825: PEEK powder
- 826: mixing or blending PEEK
- 827: packaging PEEK
- 828: water buffer tanks
- 829: centrifugation

- 830: recycling subsystem
- 831: method steps for water recycling
- 841: first separator
- 842: second separator
- 861: ethanol tanks
- 862: distillation step
- 863: centrifugation
- 864: drying
- 865: recycled DPS
- 870: removing water
- 871: steam
- 872: evaporator
- 873: centrifugation
- 874: NaF
- 876: cooling water
- 877: removing water
- 879: vacuum
- 881: line
- 882: extruding
- 883: pelletizer
- 884: magnetic separation
- 885: blending
- 886: granule packaging

## Claims

1. A method for purifying (120) a polymer selected from the group of polyaryletherketones (PAEK) obtained in the presence of a first solvent comprising the following method steps:
refining (221, 821) the polymer with a second solvent;
refining (222, 822) the polymer with water; and
separating (223, 823) impurities from the polymer through contact with a supercritical fluid, the impurities comprising at least one of the first solvent and residual monomer.

2. The method according to claim 1, wherein, during the step of separating (223) the impurities, the polymer is subjected to the supercritical fluid carbon dioxide (CO₂) at a pressure in the range of at least 95 bar and 180 bar and/or at a temperature in the range of at least 31°C and 74°C.

3. The method according to claim 1 or 2, wherein during the step of separating the impurities a co-solvent is added in the range of 0,5 vol.-% to 30 vol.-% such that a monophasic mixture of the supercritical fluid carbon dioxide (CO₂) and the co-solvent is formed.

4. The method according to claim 1 or 2, wherein the supercritical fluid carbon dioxide (CO₂) and a co-solvent form an extractant system and during the step of separating the impurities the co-solvent is added in excess such that a biphasic mixture of the extractant system is formed.

5. The method according to any of the preceding claims, wherein separating further comprises adding at least 5 vol.-% of a co-solvent and maximum 95 vol.-% supercritical CO₂.

6. The method according to any of claims 3 to 5, wherein the co-solvent is selected from the group of ethanol, acetone or ethyl acetate.

7. The method of any of the preceding claims, wherein the polyaryletherketones (PAEK) is polyether ether ketone (PEEK), which after the refining steps and use of supercritical fluid for separating is ultrapure, preferably with concentrations of each of the impurities of the polymer, preferably of the total sum of concentrations of all impurities, to less or equal than about 15 parts per million (ppm) to about 0 part per million (ppm).

8. The method according to any of the preceding claims, wherein prior to refining the polymer is grinded in the presence of water to powder form.

9. The method according to any of the preceding claims, wherein the the first solvent is diphenyl sulfone (DPS), and the residual monomer is difluorobenzophenone (BDF), wherein optionally the DPS is removed in the refining step (221, 821) using a second solvent being ethanol and maximum three washing steps, preferably one washing step, such that at least about 75% diphenyl sulfone (DPS) is removed prior to the use of supercritical fluid.

10. The method according to any of claims 3 to 9, after performing the step of separating with the supercritical carbon dioxide in the presence of the co-solvent at least 4 hours the first solvent, preferably difluorobenzophenone (BDF), is removed by 75% to 100%.

11. The method according to any of claims 2 to 10, wherein the carbon dioxide is recycled (130) comprising reducing (132, 332, 333) the pressure of the supercritical carbon dioxide to separate the impurities in at least one separator (141, 341, 342, 841), preferably comprising charcoal (345).

12. The method according to any of the preceding claims, wherein the polymer is prepared by reacting 1,4-benzenediol (hydroquinone, HQ) with 4,4 difluorobenzophenone (BDF) in the presence of alkali-metal carbonates, preferably at a temperature of at least 300°C.

13. The method according to any of the preceding claims, wherein after the step of separating the impurities are removed, such that the concentrations of each of the impurities of the polymer, preferably the total sum of concentrations of all impurities, can be reduced to less than about 0,5 parts per million (ppm).

14. The method according to any of claims 3 to 12, wherein processing time of the step of separating the impurities is between 8 hours and maximum 12 hours in the presence of a co-solvent at 20 %, in order to reduce the concentrations of each of the impurities of the polymer, preferably the total sum of concentrations of all impurities to less or equal than about 25 parts per million (ppm) to about 5 part per million (ppm).

15. Use of supercritical fluid for the purification of a polymer selected from the group of polyaryletherketones (PAEK).

16. The use of supercritical fluid according to claim 15,
wherein the polymer is PEEK and the supercritical fluid comprises carbon dioxide (CO₂) and a co-solvent,
wherein, optionally after refining the polymer being PEEK with a second solvent and/or water, about 60g to 120 g scCO₂ per g polymer is used to separate 85 % to 99 % of the impurities from the polymer.

17. The use of supercritical fluid according to claim 15, wherein the PEEK to be purified is of technical grade and only supercritical fluid is used for purification of the polymer,
wherein processing time of the step of separating the impurities is at least 4 hours, in order to reduce the concentrations of the impurities of the polymer comprising at least difluorobenzophenone (BDF) and diphenyl sulfone (DPS) to less than about 80 parts per million (ppm).

18. A system configured to perform the method steps according to the any of the claims 1 to 14 comprising:
a reactor to obtain a polymer in the presence of a first solvent;
a first refining unit (121) configured to refine (221) the polymer using a second solvent;
a second refining unit (122) configured to refine (222) the polymer with water;
an autoclave system (130) configured to separate impurities (223) from the polymer by contacting with supercritical fluid, preferably supercritical carbon dioxide (CO₂).

19. A system according to claim 18,
wherein the autoclave system comprises a pressure vessel (123) and a subsystem (130, 330, 830) for recycling carbon dioxide comprising at least one separator (141, 341, 342, 841), preferably comprising charcoal;
wherein the pressure vessel (123) is configured for pressures up to 1000 bar and for temperatures of maximum about 100°.

20. An ultrapure polymer selected from the group of polyaryletherketones (PAEK) purified according to the method steps according to any of the claims 1 to 13.
